(19) Europäisches Patentamt
European Patent Office
Office européen des brevets

(11) Veröffentlichungsnummer: **0 232 540 B1**

# (12) EUROPÄISCHE PATENTSCHRIFT

(45) Veröffentlichungstag der Patentschrift: **27.09.89**

(51) Int. Cl.⁴: **C 08 G 18/00**, C 08 G 18/58, C 08 G 18/18

(21) Anmeldenummer: **86117977.8**

(22) Anmeldetag: **23.12.86**

(54) **Wärmehärtbare Reaktionsharzgemische und ein Verfahren zur Herstellung von Formkörpern unter Verwendung dieser Gemische.**

(30) Priorität: **14.01.86 DE 3600764**

(43) Veröffentlichungstag der Anmeldung: **19.08.87 Patentblatt 87/34**

(45) Bekanntmachung des Hinweises auf die Patenterteilung: **27.09.89 Patentblatt 89/39**

(84) Benannte Vertragsstaaten: **AT BE CH DE FR GB IT LI NL SE**

(56) Entgegenhaltungen:
**EP-A- 0 130 454**
**EP-A- 0 139 895**
**GB-A- 893 240**
**US-A- 4 070 416**

(73) Patentinhaber: **BAYER AG, D-5090 Leverkusen 1 Bayerwerk (DE)**

(72) Erfinder: **Müller, Hanns Peter, Dr., Im Kerberich 6, D-5068 Odenthal (DE)**
Erfinder: **Kerimis, Dimitrios, Dr., Pulheimer Strasse 15, D-5000 Köln 71 (DE)**
Erfinder: **Heine, Heinrich, Dr., Müritzstrasse 38, D-5090 Leverkusen 1 (DE)**
Erfinder: **Uerdingen, Walter, Dr., Humperdinckstrasse 41, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 232 540 B1

ACTORUM AG

**Beschreibung**

Die vorliegende Erfindung betrifft, durch Wärmeeinwirkung zu Isocyanurat- und Oxazolidinongruppen aufweisenden Kunststoffen aushärtbare, Reaktionsharzgemische aus organischen Polyisocyanaten, organischen Polyepoxiden und speziellen Katalysatoren, sowie gegebenenfalls weiteren Hilfs- und Zusatzmitteln und ein Verfahren zur Herstellung von Formkörpern unter Verwendung dieser Gemische.

Isocyanurat- und Oxazolidinongruppen aufweisende Kunststoffe sind bekannt. Sie werden hergestellt durch Polymerisation von polyfunktionellen 1,2-Epoxiden mit Polyisocyanaten und Verwendung von Härtungskatalysatoren (DE-A-3 323 153, EP-A-0 130 454, DE-AS-3 323 084, DE-A-3 323 123). Hierfür geeignet sind z.B. tert. Amine und Imidazole, ferner Oniumhalogenide und -borate. Als thermolatente Aktivatoren kommen Additionskomplexe von Bortrihalogeniden mit tert. Aminen, Imidazolen und Morpholine in Frage.

Weiterhin kann eine Verlängerung der Topfzeit in engen Grenzen durch Verwendung von tert. Aminen oder Imidazolen, die durch Zusatz von Elektronenakzeptoren wie z.B. 7,7,8,8-Tetracyanochinodimethan desaktiviert wurden, erreicht werden.

Alle diese Aktivatorsysteme haben den Nachteil, daß sie teuer, schlecht handhabbar oder aber eine zu geringe Latenz zeigen, so daß sie zu einer relativ kurzen Gebrauchsdauer der Reaktionsharzmischung führen, was die Verarbeitung erschwert. Aus der EP-A-139 895 ist zwar die Verwendung von Ammoniumsalzen, die aus Aminen und Phosphorsäureestern erhältlich sind, als latente Katalysatoren bekannt, aber nicht für die Bildung Isocyanarat- und Oxazolidinongruppen enthaltender Reaktionsharze.

Es War daher die der Erfindung zugrundeliegende Aufgabe Reaktionsharzgemische auf Basis von organischen Polyisocyanaten und organischen polyepoxiden zur Verfügung zu stellen, die in der Hitze zu hochwertigen, Isocyanurat- und Oxazolidinongruppen aufweisenden Kunststoffen ausgehärtet werden können, die bei Raumtemperatur weitgehend lagerstabil sind, und deren Härtung zu einem beliebigen Zeitpunkt unterbrochen werden kann, so daß die Systeme in einem intermediären «B-Zustand», d.h. in einem bei Raumtemperatur oder mäßig erhöhter Temperatur festen jedoch noch schmelzbaren Zustand vorliegen, so daß sie zu einem beliebigen späteren Zeitpunkt beispielsweise nach Pulverisierung oder Auflösen in einem geeigneten Lösungsmittel unter Formgebung und weiterer Wärmeeinwirkung in den endgültigen, vernetzten und nicht mehr schmelzbaren Endzustand überführt werden können.

Diese Aufgabe konnte durch die Bereitstellung der nachstehend näher beschriebenen erfindungsgemäßen Reaktionsharzgemische gelöst werden, die durch das Vorliegen von ganz bestimmten latenten Katalysatoren gekennzeichnet sind.

Durch die erfindungsgemäßen Reaktionsharzgemische wird im übrigen eine ganz wesentliche Vereinfachung und Rationalisierung der Herstellung und Verwendung der entsprechenden Gießharzsysteme ermöglicht. Die lange Gebrauchsdauer der erfindungsgemäßen Gemische erübrigt die Verwendung von aufwendigen und störungsanfälligen Gießharzverarbeitungsanlagen mit Chargen- oder Durchlaufmischern, da sich der Bedarf an Gießharzmassen für mehrere Tage durch einen einzigen Mischprozeß decken läßt. Mischungsfehler werden damit praktisch ausgeschlossen und Arbeitzeit wird eingespart. Mit besonderem Vorteil lassen sich die erfindungsgemäßen Reaktionsharzgemische bei der Spritzgießverarbeitung gemäß DE-OS 2 017 506 verwenden.

Gegenstand der Erfindung sind somit wärmehärtbare Reaktionsharzgemische enthaltend

a) mindestens ein organisches Polyisocyanat,

b) mindestens eine, mindestens zwei Epoxidgruppen aufweisende organische Verbindung in einer solchen Menge, die einem Äquivalentverhältnis von Isocyanatgruppen zu Epoxidgruppen von 1,2:1 bis 70:1 entspricht,

c) mindestens einen, durch Wärme aktivierbaren Katalysator

und gegebenenfalls

d) weitere Hilfs- und Zusatzmittel,

dadurch gekennzeichnet, daß die Katalysatoren c) tertiäre oder quartäre Ammoniumsalze von alkylierend wirkenden oder sauren Estern von organischen Phosphonsäuren oder der Phosphorsäure sind.

Gegenstand der Erfindung ist auch ein Verfahren zur Herstellung von Formkörpern durch Vermischen von

a) mindestens einem organischen Polyisocyanat mit

b) mindestens einer organischen Verbindung mit mindestens zwei Epoxidgruppen in einer solchen Menge, die einem Äquivalentverhältnis von Isocyanatgruppen zu Epoxidgruppen von 1,2:1 bis 70:1 entspricht,

c) mindestens einem durch Wärme aktivierbaren Katalysator

und gegebenenfalls

d) weiteren Hilfs- und Zusatzmitteln,

Erhitzen des so hergestellten Gemischs auf Temperaturen von bis zu 250°C unter vorhergehender oder gleichzeitiger Formgebung, dadurch gekennzeichnet, daß man als Katalysator c) tertiäre oder quartäre Ammoniumsalze von alkylierend wirkenden oder sauren Estern von organischen Phosphonsäuren oder der Phosphorsäure verwendet.

Bei der Komponente a) der erfindungsgemäßen Gemische handelt es sich um beliebige organische Polyisocyanate der aus der Polyurethanchemie an sich bekannten Art. Geeignet sind beispielsweise aliphatische, cycloaliphatische, araliphatische, aromatische und heterocyclische Polyisocyanate, wie sie z.B. von W. Siefken in justus Liebigs Annalen der Chemie, *562*, Seiten 75 bis 136, beschrieben werden, beispielsweise solche der Formel

$$Q(NCO)_{n'}$$

in der

n = 2-4, vorzugsweise 2,

und

Q einen aliphatischen Kohlenwasserstoffrest mit 2-18, vorzugsweise 6-10 C-Atomen,

einen cycloaliphatischen Kohlenwasserstoffrest mit 4-15, vorzugsweise 5-10 C-Atomen,

einen aromatischen Kohlenwasserstoffrest mit 6-15, vorzugsweise 6-13 C-Atomen,

oder einen araliphatischen Kohlenwasserstoffrest mit 8-15, vorzugsweise 8-13 C-Atomen,

bedeuten, z.B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-Phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten werden (GB 874 430 und GB 848 671), m- und p-Isocyanato-phenylsulfonyl-isocyanate (US 3 454 606), perchlorierte Arylpolyisocyanate, (US 3 277 138), Carbodiimidgruppen aufweisende Polyisocyanate (US 3 152 162), Norbornan-Diisocyanate (US 3 492 339), Allophanatgruppen aufweisende Polyisocyanate, (GB 994 890), Isocyanuratgruppen aufweisende Polyisocyanate, (US 3 001 973), Urethangruppen aufweisende Polyisocyanate, (US 3 394 164 und 3 644 457), acylierte Harnstoffgruppen aufweisende Polyisocyanate (DE-PS 1 230 778), Biuretgruppen aufweisende Polyisocyanate, (US 3 124 605, 3 201 372 und 3 124 605), durch Telomerisationsreaktionen hergestellte Polyisocyanate (US 3 654 106), Estergruppen aufweisende Polyisocyanate, (US 3 567 763), Umsetzungsprodukte der obengenannten Isocyanate mit Acetalen (DE-PS 1 072 385) und polymere Fettsäureester enthaltende Polyisocyanate (US 3 455 883).

Es ist auch möglich, die bei der technischen Isocyanatherstellung aufallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren («TDI»), insbesondere Polyphenyl-polymethylen-polyisocyanate, wie sie durch Anilin-Formaldehyd-Kondensation und anschließende Phosgenierung hergestellt werden («rohes MDI») und Carbodiimidgruppen, Urethangruppen, Allophanatgruppen, Isocyanuratgruppen, Harnstoffgruppen oder Biuretgruppen aufweisende Polyisocyanate («modifizierte Polyisocyanate»), insbesondere solche modifizierten Polyisocyanate, die sich vom 2,4- und/oder 2,6-Toluylendiisocyanat bzw. vom 4,4'- und/oder 2,4'-Diphenyl-methandiisocyanat ableiten.

Besonders bevorzugt ist die Verwendung eines Isomeren- und/oder Homologengemisches von Polyisocyanaten der Diphenylmethan-Reihe mit einem Gehalt an 2,4'-Diisocyanatodiphenylmethan von mehr als 20 Gew.-%.

Es handelt sich hierbei um Polyisocyanatgemische der Diphenylmethanreihe mit einem Gehalt an 2,4'-Diisocyanatodiphenylmethan von mehr als 20 Gew.-% vorzugsweise von 30 bis 70 Gew.-%. Neben diesen 2,4'-Isomeren enthält die besonders bevorzugte Polyisocyanat-Komponente im allgemeinen weitere isomere bzw. homologe Polyisocyanate der Diphenylmethanreihe. Dies bedeutet, daß es sich bei der besonders bevorzugten Polyisocyanat-Komponente im allgemeinen entweder um gemische aus 2,4'-Diisocyanato-diphenylmethan mit 4,4'-Diisocyanatodiphenylmethan und gegebenenfalls 0 bis 20 Gew.-%, bezogen auf das Gesamtgemisch an 2,2'-Diisocyanat-diphenylmethan, oder aber um Gemische dieser Isomeren mit höherkernigen Polyphenyl-polymethylen-polyisocyanaten handelt. In den letztgenannten Gemischen liegt im allgemeinen ein gehalt von 10 bis zu 60 Gew.-% bezogen auf Gesamtgemisch an derartigen höherkernigen Polyisocyanaten vor. Das erstgenannte als bevorzugt einzusetzende Polyisocyanat-komponente geeignete an 2,4'-Isomeren angereicherte Diisocyanatgemisch kann beispielsweise durch Abdestillieren eines Diisocyanatgemischs der angegebenen Zusammensetzung aus einem Polyisocyanat-Gemisch erhalten werden, wie es durch Phosgenierung von Anilin/Formaldehyd-Kondensaten entsteht. Das ebenfalls besonders bevorzugt geeignete, höherkernige Polyisocyanate enthaltende Gemisch kann beispielsweise durch Rückvermischen des zuletzt genannten Destillationsproduktes mit an 4,4'-Diisocyanatodiphenylmethan verarmten Phosgenierungsprodukt beispielsweise gemäß DE-AS 1 923 214 erhalten werden. Es ist auch möglich, ein derartiges Gemisch, d.h. ein Polyisocyanatgemisch, dessen Gehalt an 2,4'-Diisocyanatodiphenylmethan den gemachten Angaben entspricht, direkt durch entsprechende Steuerung der Anilin/Formaldehyd-Kondensation zu erhalten. Die US-PS 3 277 173 beschreibt beispielsweise einen Weg zu Polyamingemischen der Diphenylmethanreihe mit einem hohen Gehalt an 2,4'-Diaminodiphenylmethan. Durch Phosgenierung dieser an 2,4'-Diaminodiphenylmethan reichen Kondensate können dann direkt die besonders bevorzugt einsetzbaren Polyisocyanate erhalten werden. Auch in der DT-OS 1 937 685 sowie in der US-PS 3 362 979 werden Wege zu derartigen Polyisocyanatgemischen gewiesen. Auch in den besonders bevorzugt geeigneten Polyisocyanatgemischen, welche höherkernige Polyisocyanate der Diphenylmethanreihe enthalten, liegt der Gehalt an 2,4'-Diisocyanatodiphenylmethan oberhalb 20 Gew.-% bezogen auf Gesamtgemisch.

Bei der Komponente b) handelt es sich um beliebige, mindestens zwei Epoxidgruppen, d.h. 1,2-Epoxidgruppen aufweisende aliphatische, cycloaliphatische, aromatische oder heterocyclische Verbindungen. Die bevorzugten als Komponente b) geeigneten Polyepoxide weisen pro Molekül 2 bis 4, vorzugsweise 2 Epoxidgruppen und ein Epoxidäquivalentgewicht von 90 bis 500, vorzugsweise 170 bis 220 auf.

Geeignete Polyepoxide sind beispielsweise Polyglycidylether mehrwertiger Phenole, beispielsweise von Brenzkatechin, Resorcin, Hydrochinon, 4,4'-Dihydroxydiphenylmethan, von 4,4'-Dihydroxy-3,3'-dimethyldiphenylmethan, von 4,4'-Dihydroxydiphenylmethan, 4,4'-Dihydroxydiphenylcyclohexan, von 4,4'-Dihydroxy-3,3'-dimethyldiphenylpropan, von 4,4'-Dihydroxydiphenyl, aus 4,4'-Dihydroxydiphenylsulfon, von Tris-(4-hydroxyphenyl)-methan, den Chlorierungs- und Bromierungsprodukten der vorstehend genannten Diphenole, von Novolacken (d.h. aus Umsetzungsprodukten von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diaminodiphenylmethan, N-Diepoxypropyl-4-aminonylglycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylether mehrwertiger Alkohole, beispielsweise von 1,4-Butandiol, 1,4-Butendiol, Glycerin, Trimethylolpropan, Pentaerythrit und Polyethylenglykolen können ebenfalls verwendet werden. Von weiterem Interesse sind Triglycidylisocyanurat, N,N'-Diepoxypropyloxamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefinen, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten. Außerdem seien Polymerisate von ungesättigten Monoepoxiden genannt, beispielsweise aus Methacrylsäureglycidylester oder Allylglycidylether.

Vorzugsweise werden erfindungsgemäß folgende Polyepoxidverbindungen oder deren Mischungen als Komponente b) verwendet:

Polyglycidylether mehrwertiger Phenole, insbesondere von Bisphenol A; Polyepoxidverbindungen auf der Basis von aromatischen Aminen, insbesondere Bis(N-epoxypropyl)-anilin, N,N'-Dimethyl-N,N'-diepoxypropyl-4,4'-diaminodiphenylmethan und N-Diepoxypropyl-4-amino-phenylglycidylethery; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan, 3,4-Epoxycyclohexylmethan-3,4-epoxycyclohexan-carboxylat.

Auch flüssige Polyepoxide oder niedrig viskose Diepoxide, wie Bis(N-epoxypropyl)anilin oder Vinylcyclohexendiepoxid können eingesetzt werden. Dies kann in besonderen Fällen die Viskosität von bereits flüssigen Polyepoxiden weiter herabsetzen oder feste Polyepoxide in flüssige Mischungen überführen.

Bei der erfindungswesentlichen Katalysatorkomponente c) handelt es sich um tertiäre oder quartäre Ammoniumsalze aus (i) organischen Aminen und (ii) alkylierend wirkenden oder sauren Estern von organischen Phosphonsäuren oder der Phosphorsäure.

Bei dem Bestandteil (i) der erfidungswesentlichen Katalysatoren c) handelt es sich um beliebige mono- oder polyfunktionelle organische Amine mit sekundären oder tertiären Aminogruppen. Bei der Herstellung der Katalysatoren können sekundäre Aminogruppen durch Alkylierung in tertiäre Ammoniumgruppen, tertiäre Aminogruppen durch Neutralisation in tertiäre Ammoniumgruppen oder durch Quaternierung in quartäre Ammoniumgruppen überführt werden. Geeignete Amine der genannten Art weisen im allgemeinen ein Molekulargewicht von 45 bis 353, vorzugsweise von 45 bis 185 auf. Typische Beispiele geeigneter Amine sind Dimethylamin, Trimethylamin, Diethylamin, Triethylamin, Di-n-butylamin, Tri-n-butylamin, N-N'-Dimethylethylendiamin, N,N,N',N'-Tetramethyl-ethylendiamin, N,N-Dimethyl-benzylamin oder Triethylendiamin.

Bei dem Bestandteil (ii) handelt es sich um alkylierend wirkende oder saure Ester von organischen Phosphonsäuren oder der Phosphorsäure. Vorzugsweise werden als Phosphonsäureester neutrale, alkylierend wirkende Ester von organischen Phosphonsäuren verwendet. Diese Verbindungen weisen im allgemeinen ein Molekulargewicht von 124 bis 214 auf. Gut geeignet sind beispielsweise Methanphosphonsäuredimethylester, Methanphosphonsäurediethylester, Benzolphosphonsäuredimethylester, Benzolphosphonsäurediethylester oder Ethanphosphonsäurediethylester. Als Ester der Phosphorsäure können sowohl einbasische saure Ester als auch neutrale Ester verwendet werden. Diese Verbindungen weisen im allgemeinen ein Molekulargewicht von 126 bis 266 auf. Geeignet sind beispielsweise Dimethylphosphat, Diethylphosphat, Di-n-butylphosphat, Triethylphosphat oder Tri-n-butylphosphat. Bevorzugte Bestandteile (ii) der erfindungswesentlichen Katalysatoren c) sind Methanphosphonsäuredimethylester und Di-n-butylphosphat.

Die Herstellung der erfindungswesentlichen Katalysatoren c) erfolgt nach bekannten Verfahren (z.B. Houben-Weyl, Bd. XII/2, S. 262 ff) durch Umsetzung der beispielhaft genannten komponenten (i) und (ii) in vorzugsweise äquivalenten Mengen mit oder ohne Lösungsmittel bei Temperaturen von 20 bis 200°C. Dabei kann vorteilhaft sein, unter Inertgas und/oder Druck zu arbeiten. Es ist auch möglich, beispielsweise einen Überschuß der Komponenten (i) oder (ii) einzusetzen, und anschließend gegebenenfalls den nicht umgesetzten Überschuß beispielsweise destillativ zu entfernen.

Besonders bevorzugte Beispiele erfindungsgemäß verwendbarer Katalysatoren c) sind:

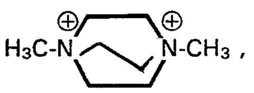
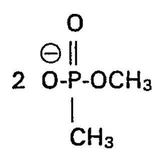

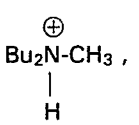
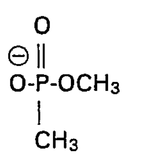

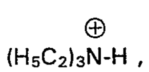
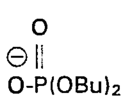

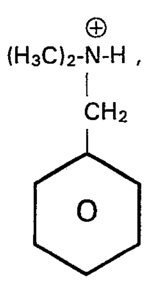
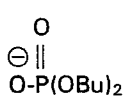

Bezogen auf 100 Gew.-Teile des Gemisches aus den Komponenten a) und b) werden die erfindungswesentlichen katalysatoren c) in einer Menge von 0,01 bis 20, vorzugsweise 0,1 bis 10 Gew.-Teilen eingesetzt. Es ist selbstverständlich auch möglich, Gemische von unterschiedlichen Katalysatoren einzusetzen. Bei Raumtemperatur feste Katalysatoren c) werden vorzugsweise bei der Herstellung der erfindungsgemäßen Gemische vorab in der Komponente b) gelöst.

Zur Herstellung der erfindungsgemäßen Gemische werden die wesentlichen Komponenten a), b) und c) miteinander vermischt, wobei die Menge der Komponente b) so bemessen wird, daß in dem Gemisch die Komponenten a) und b) in, einem Äquivalentverhältnis von Isocyanatgruppen zu Epoxidgruppen von 1,2:1 bis 70:1, vorzugsweise 1,2:1 bis 30:1 entsprechenden Mengen vorliegen.

Bei den gegebenenfalls in den erfindungsgemäßen Gemischen ebenfalls vorliegenden Hilfs- und Zusatzmitteln d) handelt es sich beispielsweise um d1) polymerisierbare, olefinisch ungesättigte Monomere, die in Mengen von bis zu 100 Gew.-%, vorzugsweise bis zu 50 Gew.-%, bezogen auf das Gesamtgewicht der Komponenten a) und b) zum Einsatz gelangen. Weitere, gegebenenfalls mitzuverwendende Hilfs- und Zusatzmittel d) sind beispielsweise d2) gegenüber Isocyanatgruppen rektionsfähige Wasserstoffatome aufweisende organische Verbindungen, die gegebenenfalls in solchen Mengen mitverwendet werden, daß auf jede Isocyanatgruppe der Komponente a) bis zu 0,5, vorzugsweise bis zu 0,4 aktive Wasserstoffatome der Komponente d2) entfallen. Im Falle der Mitverwendung derartiger Zusatzmittel d2) bezieht sich das obengenannte Äquivalentverhältnis von Isocyanatgruppen zu Epoxidgruppen auf den Isocyanat-Überschuß, der nach der Reaktion mit den aktiven Wasserstoffatomen verbleibt.

Die Mitverwendung der Hilfsmittel d1) bzw. d2) ist im allgemeinen nicht erforderlich. Die unter d1) genannten Zusatzmittel sind im übrigen gegenüber den unter d2) genannten bevorzugt. Grundsätzlich ist es jedoch auch möglich, gleichzeitig beide Arten von Zusatzmitteln mitzuverwenden. Bei Verwendung von Zusatzmitteln d1) ist die Mitverwendung von klassischen Polymerisations-Initiatoren wie z.B. von Benzoylperoxid möglich, im allgemeinen jedoch nicht erforderlich.

Typische Beispiele von Zusatzmitteln d1) sind olefinisch ungesättigte Monomere, die keine gegenüber NCO-Gruppen reaktive Wasserstoffatome aufweisen wie z.B. Diisobutylen, Styrol, $C_1$-$C_4$-Alkylstyrole wie α-Methylstyrol, α-Butylstyrol, Vinylchlorid, Vinylacetat, Acrylsäure-$C_1$-$C_8$-alkylester wie Acrylsäuremethylester, Acrylsäurebutylester oder Acrylsäureoctylester, die entsprechenden Methacrylsäureester, Acrylnitril oder Diallylphthalat. Beliebige Gemische derartiger olefinisch ungesättigter Monomerer können ebenfalls eingesetzt werden. Vorzugsweise werden Styrol und/oder (Meth)-acrylsäure-$C_1$-$C_4$-alkylester verwendet, vorausgesetzt, die Zusatzmittel d1) werden überhaupt eingesetzt.

Beispiele für gegebenenfalls mitzuverwendende Zusatzmittel d2) mit gegenüber Isocyanatgruppen reaktionsfähigen Wasserstoffatomen sind insbesondere 2 bis 8, vorzugsweise 2 bis 3 alkoholisch Hydroxylgruppen aufweisende organische Verbindungen des Molekulargewichtsbereichs 62 bis 2000, wie sie als Aufbaukomponente für Polyurethane an sich bekannt sind. Beispiele sind einfache mehrwertige Alkohole wie Ethylenglykol, hexamethylenglykol, Glycerin oder Trimethylolpropan; Estergruppen aufweisende Polyhydroxylverbindungen wie z.B. Ricinusöl oder Polyhydroxypolyester wie sie durch Polykondensation überschüssiger Mengen einfacher

mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind oder Polyhydroxypolyether wie sie durch Anlagerung von Alkylenoxiden wie Propylenoxid und/oder Ethylenoxid an geeignete Startermoleküle wie z.B. Wasser, die soeben genannten einfachen Alkohole oder auch Amine mit mindestens zwei aminischen NH-Bindungen zugänglich sind.

Weitere, gegebenenfalls mitzuverwendende Hilfs- und Zusatzmittel d) sind beispielsweise d3) an sich bekannte, die Trimerisation von Isocyanatgruppen und/oder die Addition von Isocyanatgruppen an Epoxidgruppen beschleunigende Katalysatoren. Derartige Katalysatoren können neben den erfindungswesentlichen Katalysatoren c) dann mitverwendet werden, wenn die Reaktivität der erfindungsgemäßen Gemische einem speziellen Verwendungszweck angepaßt werden soll.

Geeignete, die Trimerisierung von Isocyanatgruppen beschleunigende Katalysatoren sind beispielsweise tertiäre Amine, wie Triethylamin, Tributylamin, N-Methyl-morpholin, N-Ethyl-morpholin, N,N,N',N'-Tetramethyl-ethylendiamin, Pentamethyl-diethylentriamin, 1,4-Diazabicyclo-(2,2,2)-octan, Bis-(dimethylaminoalkyl)-piperazine (DE-OS 2 636 787), N,N-Dimethylbenzylamin, N,N-Dimethylcyclohexylamin oder monocyclische und bicyclische Amidine (DE-OS 1 720 633), Bis-(dialkylamino)alkyl-ether (US-PS 3 330 782, DE-AS 1 030 558, DE-OS 1 804 361 und DE-OS 2 618 280). Als Katalysatoren d3) kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage.

Als Katalysatoren d3) kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren d3) eingesetzt werden (DE-OS 1 769 043).

Auch organische Metallverbindungen, insbesondere organische Zinnverbindungen können als Katalysatoren d3) verwendet werden. Als organische Zinnverbindungen kommen vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, oder Dioctylzinndiacetat in Betracht.

Katalysatoren d3), die die Additionsreaktion von Isocyanatgruppen an Epoxidgruppen beschleunigen, sind beispielsweise die in «Russian Chem. Reviews *52* (6), (1983) Seiten 576 bis 593» genannten Verbindungen.

Weitere Hilfs- und Zusatzmittel d), die gegebenenfalls mitverwendet werden können sind beispielsweise Füllstoffe, Pigmente oder Weichmacher.

Geeignete Füllstoffe sind z.B. Quarzmehl, Kreide oder Aluminiumoxid.

Geeignete Pigmente sind z.B. Titandioxid, Eisenoxid oder organische Pigmente wie Phthalocyanin-Pigmente.

Geeignete Weichmacher sind z.B. Dioctylphthalat, Tributyl- oder Triphenylphosphat.

Auch die Mitverwendung von löslichen Farbstoffen oder Verstärkungsmaterialien wie z.B. von Glasfasern oder von Glasgeweben ist möglich.

Zur Herstellung der erfindungsgemäßen Gemische werden die Einzelkomponenten a), b), c) und gegebenenfalls d) vorzugsweise innerhalb des Temperaturbereichs von 0 bis 40, vorzugsweise 20 bis 30°C miteinander vermischt. Es entstehen so Reaktionsharzgemische, die bei Raumtemperatur eine Topfzeit von mindestens 7 Tagen aufweisen und erst oberhalb 60°C eine chemische Reaktion zeigen. Die Gemische können demzufolge oberhalb 60°C, d.h. insbesondere zwischen 60 und 150°C ausgehärtet werden, wobei es zwecks Erreichens optimaler Eigenschaften oftmals angezeigt ist, die resultierenden Kunststoffe bei Temperaturen zwischen 150 und 250°C, vorzugsweise zwischen 200 und 230°C nachzuhärten.

Eine für die Praxis besonders interessante Ausführungsform der Herstellung von erfindungsgemäßen Gemischen besteht darin, als Katalysatoren c) tertiäre Ammoniumsalze der vorstehend offenbarten Art zu verwenden, diese Katalysatoren der Polyisocyanatkomponente a) in den angegebenen Mengen zuzumischen und die Komponente b) dem so erhaltenen Gemisch erst kurz vor der Bearbeitung der erfindungsgemäßen Gemische einzuverleiben, wobei die gegebenenfalls mitzuverwendenden Hilfs- und Zusatzmittel d) sowohl dem vorab hergestellten Gemisch aus a) und c) als auch der Komponente b) als auch dem Gemisch aus a), b) und c) zugesetzt werden können. Es hat sich nämlich gezeigt, daß diese speziellen Katalysatoren die Lagerstabilität der Polyisocyanatkomponente a) auch bei erhöhten Temperaturen nicht beeinträchtigen und ihre katalytische Wirksamkeit erst nach Vereinigung mit der Komponente b) entfalten. Auch so hergestellte Gemische können, wie oben ausgeführt, ausgehärtet werden.

Die Härtung kann auch zu einem beliebigen Zeitpunkt durch Abkühlung auf z.B. Raumtemperatur unterbrochen und zu einem späteren Zeitpunkt fortgesetzt werden. Zweckmäßig wird der Zeitpunkt der Unterbrechung der Umsetzung so gewählt, daß die beim Abkühlen (z.B. auf Raumtemperatur) erhaltene Mischung im «B-Zustand» vorliegt, d.h. fest ist, und bei späterem Aufheizen auf die Temperatur der endgültigen Aushärtung wieder flüssig bzw. unter Druck verformbar wird. Die Anwendung dieses zuletzt genannten Verfahrens ist besonders dann vorteilhaft, wenn als Anwendsungsgebiete Schichtpreßstoffe, Preßmassen und Beschichtungsmassen, z.B. nach dem Wirbelsinterverfahren, in Betracht kommen.

Bei dieser Ausführungsform des Erfindungsgemässen Verfahrens zur Herstellung von Formkörpern geht man in der Regel so vor, daß man die durch Vermischen der Einzelkomponenten hergestellten Reaktionsharzgemische solange einer Temperatur innerhalb des Temperaturbereichs von 60 bis 180°C aussetzt, bis das Gemisch einen bei 0 bis 100°C, vorzugsweise 5 bis 60°C festen, pulverisier- und schmelzbaren, noch freie Isocyanatgruppen aufweisenden «B-Zustand» erreicht hat. Anschließend wird das so erhaltene Reaktionsprodukt, gegebenenfalls nach Pulverisieren oder Auflösen in einem geeigneten Lösungsmittel wie z.B. Aceton, Methylethylketon, Ethylacetat, Ethylglykolacetat, Chloroform, Methylenchlorid sowie gegebenenfalls nach seiner Durchmischung mit weiteren Hilfs- und Zusatzstoffen d) nach oder unter gleichzeitiger Formgebung und nach oder unter gleichzeitiger Entfernung des gegebenenfalls vorliegenden Lösungsmittels durch Verdampfen oder Verdunsten , durch Erhitzen auf 100 bis 250°C zu einem vernetzten, nicht mehr schmelzbaren Formkörper ausgehärtet.

Das erfindungsgemäße Verfahren eignet sich zur Herstellung von wärmebeständigen Kunststoffen insbesondere von Formteilen, Beschichtungen, Verklebungen der unterschiedlichsten Art. Das erfindungsgemäße Verfahren kann auch zur Herstellung von Tränk- und Imprägniermassen für Elektroisolierungen oder für glasfaserverstärkte Laminate herangezogen werden. Die beim erfindungsgemäßen Verfahren zum Einsatz gelangenden Gemische können auch als Gieß- und Vergußmassen insbesondere zur Herstellung elektrischer Bauteile verwendet werden. Hierzu gehören beispielsweise gedruckte Schaltungen, elektronische Uhren, Taschenrechner, elektronische Kameras, Computer, Mikrocomputer und digital arbeitende Datenspeicher.

Die Wärmebeständigkeit der erfindungsgemäßen Verfahrensprodukte, die niedrigen dielektrischen Verluste, die Feuchtebeständigkeit und die Abriebfestigkeit sowie die Verarbeitbarkeit in Formen sind hervorragend. Außerdem eignen sich die erfindungsgemäßen Reaktionsharzgemische zur Herstellung von Isolierstoffen der Isolierstoffklassen H und C in elektrischen Motoren und Generatoren, zur Herstellung von Konstruktionswerkstoffen für Flugzeuge, Raketen oder anderen hoch beanspruchten Geräten. Die Gemische können, insbesondere im «B-Zustand» auch als Pulverlackbindemittel oder als Klebstoff, insbesondere für Thermoplaste eingesetzt werden. Die Reaktionsharzgemische können auch als Gießharze für Isolatoren, Transformatoren, Kondensatoren, Schichtpreßstoffe, zur Herstellung von Rohren, Behältern oder Sportgeräten und auch beispielsweise im Bootsbau Verwendung finden.

Bei Verwendung geeigneter Treibmittel kann das erfindungsgemäße Verfahren auch zur Herstellung von Schaumstoffen herangezogen werden.

In den nachfolgenden Beispielen beziehen sich alle Prozentangaben bezüglich des Isocyanatgehalts auf Gewichtsprozente.

*BEISPIELE*

*Beispiel 1*

Herstellung eines erfindungsgemäß einzusetzenden Katalysators c)

112 Gew.-Teile Triethylendiamin (Dabco) und 1240 Gew.-Teile Methanphosphonsäuredimethylester werden unter leichter Stickstoff-Durchleitung 8 Stunden bei 100°C gerührt. Anschließend werden im Vakuum ca. 400 Gew.-Teile des überschüssigen Methanphosphonsäureesters abdestilliert, das ausgefallene Produkt abfiltriert und im Vakuum getrocknet. Man erhält 355 Gew.-Teile einer farblosen, kristallinen Verbindung.

*Beispiel 2*

Herstellung eines erfindungsgemäß einzusetzenden Katalysators c)

258 Gew.-Teile Di-n-butylamin und 248 Gew.-Teile Methanphosphonsäuredimethylester werden vermischt und unter Rühren auf 135 bis 150°C hochgeheizt. Nun wird mit einem Eisbad so gekühlt, daß durch die exotherme Reaktion die Temperatur auf 140 bis 150°C gehalten wird. Anschließend rührt man bei 150°C noch 5 Stunden nach.

Das erhaltene Produkt wird durch Destillation im Vakuum von unumgesetzten Ausgangsprodukten befreit. Man erhält 350 Gew.-Teile einer farblosen, viskosen Flüssigkeit, die mit der Zeit langsam kristallisiert.

*Beispiel 3*

Herstellung eines erfindungsgemäß einzusetzenden Katalysators c)

210 Gew.-Teile Di-n-butylphosphat und 101 Gew.-Teile Triethylamin werden miteinander vermischt und 1 Stunde bei 60°C gerührt.

*Beispiel 4*

Herstellung eines erfindungsgemäß einzusetzenden Katalysators c)

210 Gew.-Teile Di-n-butylphosphat und 135 Gew.-Teile N,N-Dimethylbenzylamin werden miteinander vermischt und 1 Stunde bei 60°C gerührt.

*Beispiel 5*

Modellreaktionen zum Nachweis der Isocyanurat- und Oxazolidinonbildung

59,5 g (0,5 mol) Phenylisocyanat bzw. 62,5 g (0,5 mol) Cyclohexylisocyanat und 75 g (0,5 mol) v-Phenoxypropylenoxid werden in 134,5 g o-Dichlorbenzol mit 1% der in Tabelle 1 angegebenen Katalysatoren so lange unter den angegebenen Reaktionsbedingungen gerührt, bis im Gemisch kein freies Isocyanat mehr nachweisbar ist. Die Menge an Isocyanurat und Oxyzolidinon wird anschließend über Elementaranalyse und quantitative Gaschromatographie ermittelt.

TABELLE 1

Elementaranalyse und GC-Trennung

**Quantitative Bestimmung der Oxazolidinon- bzw. Isocyanuratbildung aus 59,5 g (0,5 mol) Phenylisocyanat, 75 g (0,5 mol) v-Phenoxypropylenoxid und 1% Katalysator bzw. 62,5 g (0,5 Mol) Cyclohexylisocyanat**

| Ansatz | Isocyanat | Katalysator | Reaktionsbedingungen | Oxazolidinon m [g] | Isocyanurat m [g] |
|---|---|---|---|---|---|
| I | 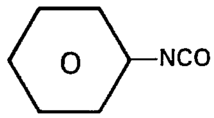 | 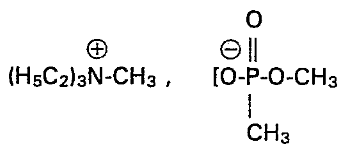 | 15 Min/120°C | 21,60 | 48,15 |
| II | 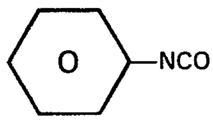 | —— » —— | 15 Min/140°C | 50,50 | 25,40 |
| III | 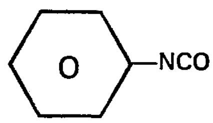 | 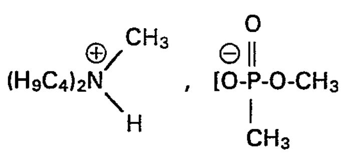 | 5 Min/160°C | 41,85 | 29,15 |
| IV | 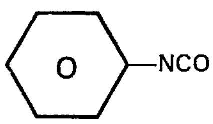 | 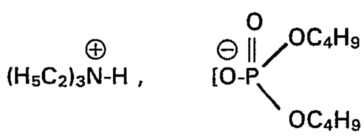 | 40 h/160°C | 29,90 | 26,10 |
| V | 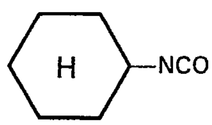 | Katalysator aus Ansatz III | 14 h/160°C | 59,80 | 1,20 |

Die Untersuchungen machen deutlich, daß in Abhängigkeit des eingesetzten Isocyanats und des verwendeten Katalysators unterschiedliche Mengen an Isocyanurat und Oxazolidinon gebildet werden. Bei höherer Temperatur bildet sich in erhöhter Menge Oxazolidinon, dies zeigen die Ansätze I und II, bei denen die gleichen Ausgangsprodukte eingesetzt wurden.

*Beispiel 6*

95 Gew.-Teile eines niederviskosen Polyisocyanatgemisches auf Basis von Diphenylmethandiisocyanat (MDI) mit 60% 2,4'-MDI Anteil und einer NCO-Zahl von 33,6 und 5 Gew.-Teile eines sehr reinen Bisphenol-A-Diglycidether mit einer Epoxidzahl von 0,58 bis 0,59 werden gemischt und mit 1 Gew.-Teil Katalysator aus Beispiel 3 versetzt. Die Mischung besitzt einen NCO-Gehalt von 31,6% und eine Viskosität von 15,1 mPas 25°C.

Nach Lagerung bei Raumtemperatur wird der NCO-Gehalt der Mischung und die Viskosität ermittelt:

| Tage | 16 | 29 | 34 |
|---|---|---|---|
| % NCO | 28,2 | 21,3 | 16,3 |
| η 25°C mPas | 112 | 2928 | fest |

Die gebrauchsfertige Gießharzmischung ist im flüssigen Zustand ca. 30 Tage lang verarbeitbar.

Mit der oben beschriebenen Reaktionsharzmischung wurden Platten der Größe 200 mm/300 mm/4 mm gegossen und gehärtet. Die mechanischen und elektrischen Eigenschaften der Formstoffe zeigt Tabelle 2.

TABELLE 2

Eigenschaften der Gießharzformstoffe

| Ansatz | | erf.-gemäß |
|---|---|---|
| MDI wie in Bsp. 6 beschrieben | 95 | 95 |
| Bis-Epoxid wie in Bsp. 6 beschrieben | 5 | 5 |
| Dimethylbenzylamin | 1 | — |
| Katalysator aus Bsp. 3 | — | 1 |
| Härtung | 4 h/80°C<br>+16 h/220°C | 8 h/120°C<br>+16 h/220°C |
| Zugfestigkeit (MPa) | 45 | 54 |
| Reißdehnung (%) | 1,3 | 2,0 |
| E-Modul (MPa) | 3280 | 3570 |
| Biegefestigkeit (MPa) | 116 | 99 |
| Randfaserdehnung bei Bruch (mm) | 2,5 | 2,37 |
| Schlagzähigkeit (KJ/mm$^2$) | 9 | 8 |
| Kugeldruckhärte (MPa) | 245 | 240 |
| Martensgrad (°C) | 250 | 250 |
| Topfzeit | 15-20 Min | mind. 7 Tage |
| Bemerkung | gelegentliche Schaumbildung | problemlose Härtung ohne Schaumbildung |
| Dielektrizitätszahl $\varepsilon_r$ der erfindungsgemäßen Gießharzformstoffe | bei 23°C/50 Hz | 3,43 |
| | 50°C/50 Hz | 3,45 |
| | 80°C/50 Hz | 3,45 |
| | 23°C/ 1 kHz | 3,30 |
| | 23°C/ 1 MHz | 3,21 |
| | 100°C/50 Hz | 3,43 |
| | 150°C/50 Hz | 3,43 |
| | 200°C/50 Hz | 3,40 |
| Dielektrischer Verlustfaktor tan δ der erfindungsgemäßen Gießharzformstoffe | bei 23°C/50 Hz | 0,0063 |
| | 50°C/50 Hz | 0,0056 |
| | 80°C/50 Hz | 0,0047 |
| | 23°C/ 1 kHz | 0,0066 |
| | 23°C/ 1 MHz | 0,0087 |
| | 100°C/50 Hz | 0,0038 |
| | 150°C/50 Hz | 0,0024 |
| | 200°C/50 Hz | 0,0018 |

*Beispiel 7*

Man verfährt wie in Beispiel 6 beschrieben nur mit dem Unterschied, daß die beschriebene Reaktionsharzmischung 19 Minuten auf 120°C erwärmt wird. Die Mischung wird danach auf eine Teflonplatte ausgegossen und nach Erkalten pulverisiert.

Man erhält auf diese Weise einen bei Raumtemperatur lagerstabilen B-Zustand der Reaktionsharzmischung. Das pulverisierte Harz ist in Aceton oder Methylethylketon gut löslich. Die Lösungen können als Tränkharzflüssigkeiten zur Imprägnierung von Glasfasergeweben oder Transformatorenentwicklungen eingesetzt werden.

Das pulverisierte Harz besitzt einen NCO-Gehalt von 13,8%. Nach Lagerung bei Raumtemperatur über einen Zeitraum von 6 Monaten beträgt der NCO-Gehalt des Harzes 12,7%.

Das pulverisierte Reaktionsharz wird wie folgt verarbeitet:

*Herstellung von Rundscheiben*

In eine kalte, mit Trennmittel versehene Preßform, mit einem Durchmesser von 130 mm, werden 60 g gemahlener B-Zustand eingefüllt und gleichmäßig verteilt. Die Form wird mit einem Stempel verschlossen und in eine 200°C heiße Presse gegeben. Bei einem druck von 25 mbar bei 200°C wird 60 Minuten gepreßt. Danach wird die Form unter Druck auf Raumtemperatur abgekühlt und die Rundscheibe von 3 mm Stärke entformt.

Die Platte wurde in Normprüfstäbe aufgeschnitten, die teilweise noch nachgetempert wurden.

Folgende Prüfwerte wurden ermittelt:

TABELLE 3

| Härtung | a<br>1 h/200°C | b<br>1 h/200°C<br>+6 h/200°C | c<br>1 h/200°C<br>+24 h/200°C | d<br>1 h/200°C<br>+6 h/250°C |
|---|---|---|---|---|
| Biegefestigkeit (MPa) | 82,4 | 93,3 | 98,4 | 87,3 |
| Randfaserdehnung (%) | 3,1 | 3,4 | 3,6 | 2,8 |
| Schlagzähigkeit (kJ/m²) | 6,2 | 9,1 | 12,7 | 5,8 |
| Martensgrad (°C) | 175 | 229 | 240 | 239 |

*Beispiel 8*

In Mischungen des in Beispiel 6 beschriebenen Polyisocyanatgemisches und des Bisphenol-A-Diglycidethers werden verschiedene erfindungsgemäße Katalysatoren zugesetzt und die Viskosität und der NCO-Gehalt der Mischung nach 7 Tagen Lagerung bei Raumtemperatur ermittelt. Zum Vergleich wurde ein Beschleuniger des Standes der Technik nämlich Dimethylbenzylamin eingesetzt.

TABELLE 4

| | Gew.-Teile Polyisocyanat | Gew.-Teile Bisepoxid | Katalysator 1% | η 25°C (mPas) | % NCO |
|---|---|---|---|---|---|
| Vergleich | 95 | 5 | 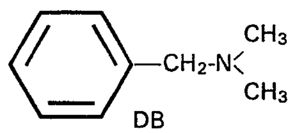 DB | nach 15 bis 20 Min. vernetzt | |
| | | | | nach 7 Tagen | |
| A | 95 | 5 | 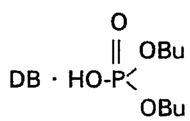 | 18,1 | 31,4 |
| B | 95 | 5 | aus Bsp. 3 | 46,9 | 31,4 |
| C | 90 | 10 | aus Bsp. 3 | 26,0 | 28,9 |
| D | 80 | 20 | aus Bsp. 3 | 40,2 | 25,7 |
| E | 125 | 170 | aus Bsp. 3 | 279 | 14,0 |
| F | 250 | 68 | aus Bsp. 3 | 51 | 24,7 |

Mit den oben beschriebenen Reaktionsharzmischungen wurden Platten der Grösse 200 mm/300 mm/4 mm gegossen. Nach dreistündiger Behandlung bei 130°C wurde die Temperatur noch 24 Stunden bei 180°C und anschließend weitere 24 Stunden bei 200°C gehalten. Die mechanischen Eigenschaftswerte der Formstoffe zeigt Tabelle 5.

TABELLE 5

| | Reaktionsharz | | | | | |
|---|---|---|---|---|---|---|
| | A | B | C | D | E | F |
| Zugfestigkeit (MPa) | 57 | 54 | 53 | 46 | 66 | 48 |
| Reißdehnung (%) | 1,8 | 1,8 | 1,6 | 1,5 | 1,9 | 1,5 |
| E-Modul aus Zugversuch (MPa) | 3470 | 3570 | 3976 | 3680 | 4030 | 3920 |
| Biegefestigkeit (MPa) | 109 | 90,9 | 81,6 | 76,4 | 95,4 | 69,2 |
| Randfaserdehnung (%) | 3,4 | 1,8 | 2,2 | 4,1 | 2,3 | 2,0 |
| Schlagzähigkeit (kJ/m²) | 10,4 | 5,6 | 6,9 | 4,1 | 6,1 | 5,1 |
| Kugeldruckhärte (MPa) | 234 | 235 | 281 | 248 | 218 | 250 |
| Martensgrad (°C) | 236 | 227 | 236 | 249 | 124 | >250 |

*Beispiel 9*

380 Gew.-Teile des in Beispiel 6 beschriebenen Polyisocyanatgemisches (MDI), 40 Gew.-Teile eines Isocyanuratgruppen aufweisenden Polyisocyanats auf Basis von Hexamethylendiisocyanat mit einem NCO-Gehalt von 21,6% und einer Viskosität von 2628 mPas 25°C, 20 Gew.-Teile Bisphenol-A-Diglycidether und 4 Gew.-Teile des Katalysators aus Beispiel 3 werden intensiv gemischt; danach wird der Mischung 1036 Gew.-Teile Quarzmehl zugesetzt und die Mischung unter Stickstoff auf 110°C aufgeheizt.

Der NCO-Gehalt der Mischung beträgt 9,1%. Danach wird die Temperatur auf 120°C gesteigert und das Reaktionsgemisch 1 Stunde bei dieser Temperatur gerührt. Nach dieser Zeit ist der NCO-Gehalt der Mischung auf 4,57% abgefallen.

Das Reaktionsharz wird dann auf eine Teflonplatte ausgegossen und nach Erkalten pulverisiert. Das pulverisierte Reaktionsharz besitzt einen Erweihungspunkt von 90-100°C und wird folgendermaßen zu Formpreß-Stoffen verarbeitet:

80 g des Pulvers werden wie in Beispiel 7 beschrieben in einer Rundform unter Hitze und Druck zu einer Platte verarbeitet. Die Härtebedingungen waren:

30 Min/200°C/25 bar.

An dem homogenen Preßteil wurden folgende Werte bestimmt:

| | |
|---|---|
| Kugeldruckhärte (MPa) | 443 |
| Martensgrad (°C) | 249 |

**Patentansprüche**

1. Durch Wärmeeinwirkung zu Isocyanurat- und Oxyzolidinongruppen aufweisenden Kunststoffen aushärtbare Reaktionsharzgemische, enthaltend

a) mindestens ein organisches Polyisocyanat,

b) mindestens eine, mindestens zwei Epoxidgruppen aufweisende organische Verbindung in einer solchen Menge, die einem Äquivalentverhältnis von Isocyanatgruppen zu Epoxidgruppen von 1,2:1 bis 70:1 entspricht,

c) mindestens einen, durch Wärme aktivierbaren Katalysator

und gegebenenfalls

d) weitere Hilfs- und Zusatzmittel,

dadurch gekennzeichnet, daß die Katalysatoren c) tertiäre oder quartäre Ammoniumsalze von alkylierend wirkenden oder sauren Estern von organischen Phosphonsäuren oder der Phosphorsäure sind und in einer Menge von 0,01 bis 20 Gew.-Teilen bezogen auf 100 Gew.-Teile aus den Komponenten a) und b) enthalten sind.

2. Wärmehärtbare Reaktionsharzgemische gemäß Anspruch 1, dadurch gekennzeichnet, daß die Katalysatoren c) tertiäre Ammoniumsalze darstellen, die durch Neutralisation von tertiären Aminen mit sauren Estern der Phosphorsäure oder durch Alkylierung von sekundären Aminen mit alkylierend wirkenden Estern von organischen Phosphonsäuren oder der Phosphorsäure erhalten worden sind.

3. Verfahren zur Herstellung von Formkörpern enthaltend Isocyanurat- und Oxazolidinongruppen aufweisende Kunststoffe durch Vermischen von

a) mindestens einem organischen Polyisocyanat mit

b) mindestens einer organischen Verbindung mit mindestens zwei Epoxidgruppen in einer solchen Menge, die einem Äquivalentverhältnis von Isocyanatgruppen zu Epoxidgruppen von 1,2:1 bis 70:1 entspricht,

c) mindestens einem durch Wärme aktivierbaren Katalysator

und gegebenenfalls

d) weiteren Hilfs- und Zusatzmitteln,

Erhitzen des so hergestellten Gemisches auf Temperaturen von bis zu 250°C unter vorhergehender oder gleichzeitiger Formgebung, dadurch gekennzeichnet, daß man als Katalysator c) tertiäre oder quartäre Ammoniumsalze von alkylierend wirkenden oder sauren Estern von organischen Phosphonsäuren oder der Phosphorsäure verwendet in einer Menge von 0,01-20 Gew.-Teilen, bezogen auf 100 Gew.-Teile aus den komponenten a) und b).

4. Verfahren zur Herstellung von Formkörpern gemäß Anspruch 3, dadurch gekennzeichnet, daß man das durch Vermischen der Komponenten a), b), c) und gegebenenfalls d) hergestellte Reaktionsgemisch bei 60 bis 180°C zu einem bei 0 bis 100°C, vorzugsweise 5 bis 60°C festen, pulverisier- und schmelzbarem, noch freie Isocyanatgruppen aufweisenden Reaktionsprodukt umsetzt und das so erhaltene Reaktionsprodukt gegebenenfalls nach Pulverisierung oder Auflösen in einem geeigneten Lösungsmittel, sowie gegebenenfalls nach seiner Durchmischung mit weiteren Hilfs- und Zusatzstoffen nach oder unter gleichzeitiger Formgebung und nach oder unter gleichzeitiger Entfernung des gegebenenfalls vorliegenden Lösungsmittels durch Verdampfen oder Verdunsten, durch Erhitzen auf 100°C bis 250°C zu einem vernetzten, nicht mehr schmelzbaren Formkörper aushärtet.

**Claims**

1. Reactive resin mixtures hardenable by heat to form plastics containing isocyanurate and oxazolidinone groups and containing

a) at least one organic polyisocyanate,

b) at least one organic compound containing at least two epoxide groups in a quantity corresponding to an equivalent ratio of isocyanate groups to epoxide groups of from 1.2:1 to 70:1,

c) at least one heat-activatable catalyst

and, optionally,

d) other auxiliaries and additives,

characterized in that the catalysts c) are tertiary or quaternary ammonium salts of alkylating or acidic esters of organic phosphonic acids or phosphoric acid and are present in a quantity of from 0.01 to 20 parts by weight, based on 100 parts by weight of compounds a) and b).

2. Thermosetting reactive resin mixtures as claimed in claim 1, characterized in that the catalysts c) are tertiary ammonium salts which have been obtained by neutralization of tertiary amines with acidic esters of phosphoric acid or by alkylation of secondary amines with alkylating esters of organic phosphonic acids or phosphoric acid.

3. A process for the production of moldings comprising plastics containing isocyanurate and oxazolidinone groups by mixing

a) at least one organic polyisocyanate with

b) at least one organic compound containing at least two epoxide groups in a quantity corresponding to an equivalent ratio of isocyanate groups to epoxide groups of from 1.2:1 to 70:1,

c) at leat one heat-activatable catalyst

and, optionally,

d) other auxiliaries and additives,

and heating the mixture thus prepared to temperatures of up to 250°C preceded or accompanied by molding, characterized in that tertiary or quaternary ammonium salts of alkylating or acidic esters of organic phosphonic acids or phosphoric acid are used as the catalyst c) in quantities of from 0.01 to 20 parts by weight, based on 100 parts by weight of components a) and b).

4. A process for the production of moldings as claimed in claim 3, characterized in that the reaction mixture prepared by mixing components a), b), c) and, optionally, d) is reacted at 60 to 180°C to form a powderable and fusible reaction product still containing free isocyanate groups which is solid at 0 to 100°C and preferably at 5 to 60°C and the reaction product thus obtained is hardened by heating to 100 to 250°C to form a crosslinked, infusible molding, optionally after size-reduction to a powder or dissolution in a suitable solvent and, optionally, after mixing with further auxiliaries and additives, either after or with simultaneous forming in molds and after or with simultaneous removal of the solvent present, if any, by evaporation.

**Revendications**

1. Mélanges résineux réactifs durcissables sous l'action de la chaleur en résines synthétiques contenant des groupes isocyanurate et oxazolidinone, contenant:

a) au moins un polyisocyanate organique,

b) au moins un composé organique contenant au moins deux groupes époxyde en quantité correspondant à un rapport de 1,2:1 à 70:1 entre les équivalents de groupes isocyanate et les équivalents de groupes époxyde,

c) au moins un catalyseur activable à la chaleur et le cas échéant

d) d'autres produits auxiliaires et additifs, caractérisés en ce que les catalyseurs c) sont des sels d'ammonium tertiaires ou quaternaires d'esters alkylants ou acides d'acides organiques phosphoniques ou de l'acide phosphorique, et sont contenus en quantité de 0,01 à 20 parties en poids pour 100 parties en poids des composants a) et b).

2. Mélanges résineux réactifs durcissables sous l'action de la chaleur selon la revendication 1, caractérisés en ce que les catalyseurs c) sont des sels d'ammonium tertiaires qui ont été obtenus par neutralisation d'amines tertiaires par des esters acides de l'acide phosphorique ou par alkylation d'amines secondaires par des esters alkylants d'acides organiques phosphoniques ou de l'acide phosphorique.

3. Procédé pour la fabrication d'objets moulés en résines synthétiques contenant des groupes isocyanurate et oxazolidinone par mélange de:

a) au moins un polyisocyanate organique avec

b) au moins un composé organique contenant au moins deux groupes époxyde en quantité correspondant à un rapport de 1,2:1 à 70:1 entre les équivalents de groupes isocyanate et les équivalents de groupes époxyde,

c) au moins un catalyseur activable à la chaleur et le cas échéant

d) d'autres produits auxiliaires et additifs, chauffage du mélange obtenu à des températures allant jusqu'à 250°C après formage ou avec formage simultané, caractérisé en ce que l'on utilise en tant que catalyseurs c) des sels d'ammonium tertiaires ou quaternaires d'esters alkylants ou acides d'acides organiques phosphoniques ou de l'acide phosphorique, en quantité de 0,01 à 20 parties en poids pour 100 parties en poids des composants a) et b).

4. Procédé pour la fabrication d'objets moulés selon la revendication 3, caractérisé en ce que l'on convertit le mélange de réaction préparé par mélange des composants a), b), c) et éventuellement d) à des températures de 60 à 180°C, en un produit de réaction solide, broyable et fusible à des températures de 0 à 100°C, de préférence de 5 à 60°C, et contenant encore des groupes isocyanate libres, puis on durcit le produit de réaction ainsi obtenu, éventuellement après broyage ou dissolution dans un solvant approprié, et le cas échéant après mélange avec d'autres produits auxiliaires et additifs, après formage ou avec formage simultané, et après élimination ou avec élimination simultanée du solvant éventuel par évaporation, en un corps moulé réticulé, qui n'est plus fusible, par chauffage à des températures de 100 à 250°C.